# EUROPEAN PATENT APPLICATION

(11) **EP 4 407 160 A1**
(43) Date of publication of application: **31.07.2024**
(21) Application number: 23211847.1
(22) Date of filing: 23.11.2023
(51) Int. Cl.: F02C 3/22, F02C 3/30, F02C 7/16, F02C 7/224, F02C 7/32

(54) **POWER ELECTRONICS WASTE HEAT RECOVERY IN RECUPERATION CYCLE**

(30) Priority: 27.01.2023 US 202363441565 P; 05.06.2023 US 202318329091
(71) Applicant: RTX Corporation, Farmington, CT 06032 (US)
(72) Inventor: TERWILLIGER, Neil J., Cheshire, 06410 (US)
(74) Representative: Dehns

(57) **Abstract**

A propulsion system for an aircraft includes a core engine (20) having a core flow path (54) where air is compressed in a compressor section (24), communicated to a combustor section (26), mixed with a cryogenic fuel (90) and ignited to generate an exhaust gas flow (52) that is expanded through a turbine section (28). The propulsion system includes a condenser (56) in the core flow path (54) and configured to extract water (58) from the exhaust gas flow (52), an evaporator (64) in the core flow path (54) and configured to receive a portion of the water (58) that is extracted by the condenser (56) to generate a steam flow (66), the steam flow (66) is injected into the core flow path (54) upstream of the turbine section (28), an electrical device (76; 80; 86) that generates thermal energy, and a heat exchanger (78; 82; 88) where thermal energy from the electrical device (76; 80; 86) is communicated to a cooling water flow (58).

## Description

### TECHNICAL FIELD

The present disclosure relates generally to an alternate fuel turbine engine that includes a steam injection system that transforms water recovered from an exhaust gas flow into steam.

### BACKGROUND

Reduction and/or elimination of carbon emissions generated by aircraft operation is a stated goal of aircraft manufacturers and airline operators. Gas turbine engines compress incoming core airflow, mix the compressed airflow with fuel that is ignited in a combustor to generate a high energy exhaust gas flow. Some energy in the high energy exhaust flow is recovered as it is expanded through a turbine section. Even with the use of alternate fuels, a large amount of energy in the form of heat is simply exhausted from the turbine section to atmosphere. The lost heat reduces the overall efficiency of the engine Alternate fuels have been proposed including ammonia and hydrogen to reduce emissions. Additionally, steam injection using water recovered from an exhaust gas flow may provide additional engine power by increasing mass flow through a turbine section. Electrical motors, generators, power electronics and other electric devices will also be part of any alternate engine architecture. Power electronics produce heat that can limit application and can introduce energy storage and transfer efficiency challenges. The heat produced by the power electronics represents a loss of energy that may limit engine efficiency and power production.

Turbine engine manufacturers continue to seek further improvements to engine performance including improvements to reduce environmental impact while improving propulsive efficiencies.

### SUMMARY

A propulsion system for an aircraft according to a first aspect of the invention includes a core engine that includes a core flow path where air is compressed in a compressor section, communicated to a combustor section, mixed with a cryogenic fuel (such as a hydrogen based fuel, for example, liquid hydrogen (LH₂)) and ignited to generate an exhaust gas flow that is expanded through a turbine section. The propulsion system includes a condenser that is arranged along the core flow path and configured to extract water from the exhaust gas flow, an evaporator that is arranged along the core flow path and configured to receive a portion of the water that is extracted by the condenser to generate a steam flow, the steam flow is injected into the core flow path upstream of the turbine section, an electrical device that generates thermal energy, and a heat exchanger where thermal energy from the electrical device is communicated to a cooling water flow.

In an embodiment of the foregoing propulsion system, a flow of water is heated by thermal energy from the power electronic device in the heat exchanger is routed to the evaporator.

In a further embodiment of any of the foregoing propulsion systems, the propulsion system further includes a sealed coolant circuit that includes a cooling circuit heat exchanger where a cooling medium transfers thermal energy from the electrical device to the cooling water flow.

In a further embodiment of any of the foregoing propulsion systems, the electrical device includes an electric motor/generator.

In a further embodiment of any of the foregoing propulsion systems, the electric motor/generator is coupled to drive at least one accessory device.

In a further embodiment of any of the foregoing propulsion systems, the electrical device includes a power electronic device.

In a further embodiment of any of the foregoing propulsion systems, the electrical device includes a fuel cell that generates electric power.

In a further embodiment of any of the foregoing propulsion systems, the cryogenic fuel includes a hydrogen based fuel that is communicated to the fuel cell along with a bypass airflow.

In a further embodiment of any of the foregoing propulsion systems, unused hydrogen based fuel expelled from the fuel cell is communicated back to a fuel storage tank.

In a further embodiment of any of the foregoing propulsion systems, the turbine section includes at least a low pressure turbine, a high pressure turbine and an intermediate pressure turbine and the compressor section includes a high pressure compressor that is coupled to the high pressure turbine through a high shaft and a low pressure compressor is coupled to the intermediate pressure turbine through an intermediate shaft.

In a further embodiment of any of the foregoing propulsion systems, the propulsion system includes a gearbox that is coupled to the low pressure turbine through a low shaft for driving a fan at a rotational speed lower than a rotational speed of the low pressure turbine.

A propulsion system for an aircraft according to another aspect of the invention includes a core engine that includes a core flow path where air is compressed in a compressor section, communicated to a combustor section, mixed with a cryogenic fuel (such as a hydrogen based fuel, for example, liquid hydrogen (LH₂)) and ignited to generate an exhaust gas flow that is expanded through a turbine section. The propulsion system includes a cryogenic fuel system for supplying the cryogenic fuel to the combustor through a fuel flow path, the cryogenic fuel system includes a cryogenic fuel tank and a fuel pump for pressurizing a liquid cryogenic fuel, a condenser is arranged along the core flow path and configured to extract water from the exhaust gas flow, an evaporator is arranged along the core flow path and configured to receive a portion of the water that is extracted by the condenser to generate a steam flow, the steam flow is injected into the core flow path upstream of the turbine section, an electrical device generates thermal energy, and a heat exchanger is in thermal communication with the electrical device where thermal energy from the electrical device is communicated into a water flow.

In an embodiment of the foregoing propulsion system, the condenser is in thermal communication with a bypass airflow passage for cooling the exhaust gas flow in the condenser during aircraft operation.

In a further embodiment of any of the foregoing propulsion systems, the propulsion system further includes a sealed coolant circuit that includes a cooling circuit heat exchanger where a cooling medium transfers thermal energy from the electrical device to the cooling water flow.

In a further embodiment of any of the foregoing propulsion systems, the electrical device includes an electric motor/generator.

In a further embodiment of any of the foregoing propulsion systems, the electrical device includes a power electronic device.

In a further embodiment of any of the foregoing propulsion systems, the electrical device includes a fuel cell that generates electric power.

A method of recovering thermal energy from an electrical device in an aircraft propulsion system according to another aspect of the invention includes configuring a core engine to generate an exhaust gas flow from a cryogenic fuel (such as a hydrogen based fuel, for example, liquid hydrogen (LH₂)), configuring a condenser to extract water from the exhaust gas flow, configuring an evaporator to generate a steam flow by heating extracted water from the condenser with a portion of the exhaust gas flow, and communicating thermal energy that is generated by an electrical device into a cooling water flow from the condenser within a heat exchanger.

In an embodiment of the foregoing method, the method further includes communicating thermal energy that is generated by the electrical device into a cooling medium that circulates in a sealed cooling circuit and transfers thermal energy from the cooling medium into the cooling water flow.

In a further embodiment of any of the foregoing methods, the electrical device includes one or more of an electric machine, power electronics or a fuel cell.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example propulsion system with an example waste heat recovery system embodiment.
Figure 2 is a schematic view of another example propulsion system with another example waste heat recover system embodiment.

### DETAILED DESCRIPTION

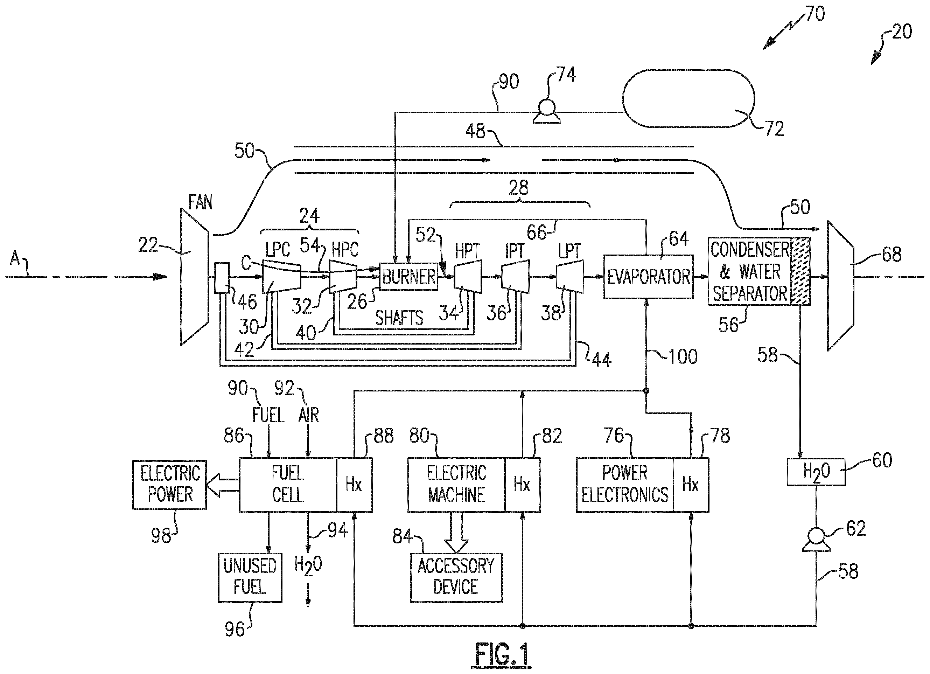

Figure 1 schematically illustrates an example hydrogen steam injected inter-cooled turbine engine that is generally indicated at 20. The disclosed example engine embodiment utilizes a water is recovered from an exhaust gas flow to cool electrical devices and recover thermal energy to increase engine efficiency.

The engine 20 includes core engine with a core airflow path C through a fan 22, a compressor section 24, a combustor 26 and a turbine section 28. The fan 22 drives inlet air as a core flow 54 into the compressor section 24. In the compressor section 24, the core flow 54 is compressed and communicated to a combustor 26. In the combustor 26, the core flow 54 is mixed with a fuel flow 90 and ignited to generate a high energy gas flow 52 that expands through the turbine section 28 where energy is extracted and utilized to drive the fan 22 and the compressor section 24. A bypass flow 50 may flow through the fan 22 and bypass passage 48 that is disposed outside of the core engine to bypass the remaining components of the engine 20. The high energy gas flow 52 is exhausted from the turbine section 28 and communicated through an evaporator 64 and a condenser assembly 56 before being exhausted through a nozzle 68.

The example compressor section 24 includes a low pressure compressor (LPC) 30 and a high pressure compressor (HPC) 32. The turbine section 28 includes a high pressure turbine (HPT) 34, an intermediate pressure turbine (IPT) 36, and a low pressure turbine (LPT) 38. The turbines 34, 36 and 38 are coupled to a corresponding compressor section. In this disclosed example, the HPT 34 is coupled by a high shaft 40 to drive the HPT 32. An intermediate shaft 42 couples the IPT 36 to the LPC 30.

A low shaft 44 is coupled between the LPT 38 and a gearbox 46 to drive the fan 22. The example gearbox 46 is an epicyclical gear train, such as a planetary gear system, star gear system or other known gear system, with a gear reduction ratio of greater than about 2.3.

The engine 20 is configured to burn hydrogen provided by a fuel system 70. The fuel system 70 includes a liquid hydrogen (LH₂) tank 72 in communication with at least one pump 74. The pump 74 drives a fuel flow 90 to the combustor through a fuel system and eventually to the combustor 26.

The condenser 56 recovers water from the exhaust gas flow 52 and initially communicates that water 58 to a storage tank 60. The storage tank 60 operates as an accumulator to store water and accommodate fluctuations in engine operation and water recovery. A pump 62 pressurizes the water flow 58 and eventually communicates the water flow 58 to the evaporator 64.

The evaporator 64 is exposed to heat from the exhaust gas flow 52 to generate a steam flow 66 from the water flow 58 from the condenser assembly 56. The generated steam improves performance by increasing turbine mass flow and power output without additional work required by the compressor section 24. In one example embodiment, the steam flow is injected into the combustor 26. The steam flow 66 may also be injected at a location upstream of the combustor 26.

The engine 20 has an increased power output from the injected steam 66 due to an increasing mass flow through the turbine section 32 without a corresponding increase in work from the compressor section 24. An example engine operation cycle may include up to (or more than) 35% steam-air-ratios (SAR) and may be assisted by a multiple fold (e.g., 2x, 3x, etc.) increase in moisture from burning H₂ as the fuel.

Before communication to the evaporator 64, the water flow is communicated to at least one heat exchanger where thermal energy is recovered from an electrical device. In one disclosed example embodiment, the water flow 58 is communicated to a heat exchanger 78 associated with a power electronics device 76. In this disclosure, the power electronics device 76 may be any control or power conversion system associated with the engine 20. Moreover, the power electronics device 76 may be associated with aircraft systems such as environmental control systems, instrumentation systems, motor control systems and any other device that uses, generates or controls the application of electric power. The use, generation and control of electric power is accompanied by some energy loss in the form of heat.

The heat exchanger 78 transfers at least a portion of the generated heat into the cooling water flow 58. A heated water flow 100 from the heat exchanger 78 is communicated to the evaporator 64. The added thermal energy to the heated water flow 100 aids in the transformation of the steam flow 66 by reducing the amount of heat energy required to be input within the evaporator 64 for transformation into the steam flow 66. The steam flow 66 further recovers the heat energy by adding additional mass flow to the core flow 54 without additional expenditures of energy from the compressor section 24 and the turbine sections 28.

In another disclosed embodiment, a heat exchanger 82 associated with an electric machine 80 provides for the recovery of heat by heating the water flow 58. The example electric machine 80 may be an electric motor, electric generator or a duel use motor/generator. The electric machine 80 may be coupled to drive at least one accessory device 84. The accessory device 84 may include a fuel pump, actuator, gear system or an accessory gear box associated with an engine or aircraft component.

In another disclosed example, a heat exchanger 88 is associated with a fuel cell 86 that generates electric power 98 from a fuel flow 90 and air flow 92 in the presence of a catalyst as is known. In one disclosed example, the fuel cell 86 utilizes the hydrogen based fuel flow 90 from the fuel system 70, combined with an air flow 92 to produce electric power 98. The production of electric power with the fuel cell 86 can reduce and/or eliminate the need for heavy battery systems aboard an aircraft to provide electric power. The fuel cell 86 operates as known to generate the electric power 98 with the fuel and air flows 90, 92 and exhausts a flow of water 94 and unused fuel 96. The water 94 may be directed to the water storage tank 60 or exhausted overboard. The unused fuel 96 may be communicated back to the fuel tank 72 or into the flow directed to the combustor 26.

In the disclosed example shown in Figure 1, the power electronics 76, electric machine 80 and fuel cell 86 are all schematically shown. However, only one of the example electrical devices need be utilized within the contemplation of this disclosure. Moreover, although a separate heat exchanger is shown for each of the example electrical devices, a single heat exchanger or combination of heat exchangers could be utilized and remain with the contemplation of this disclosure. Additionally, although the power electronics 76, electric machine 80 and fuel cell 86 are shown and described my way of example, other electronic devices that generate heat may be utilized and are within the contemplation of this disclosure.

Heated water flow 100 from each of the heat exchangers 78, 82 and 88 provides for the recovery of thermal energy produced by the electrical devices in the form of the steam generated and injected into the core flow 52. In one disclosed example, the steam flow 66 is injected into the combustor 26.

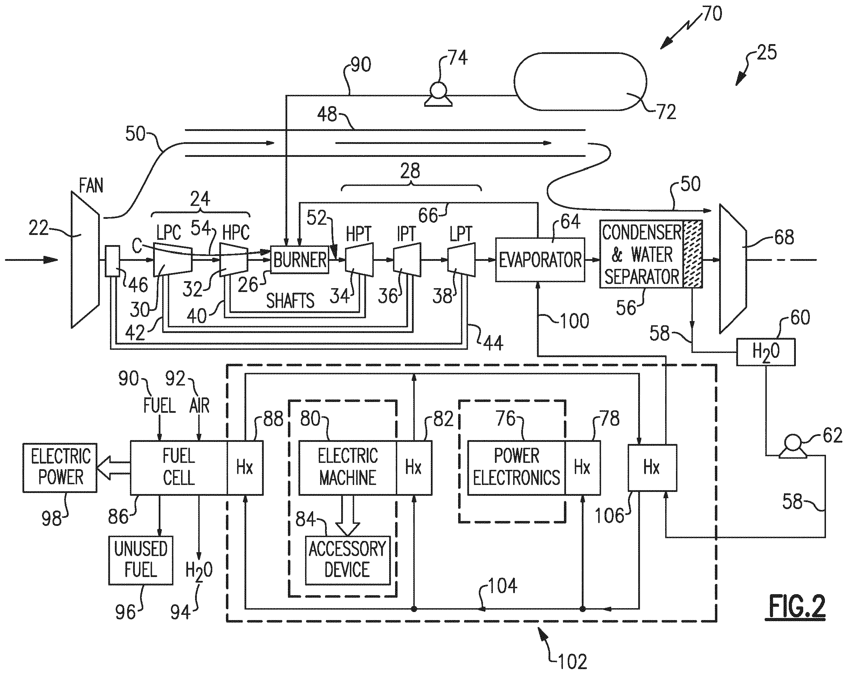

Referring to Figure 2, another example engine embodiment is indicated at 25 and includes a sealed cooling circuit 102 for transferring thermal energy from the heat producing electrical devices 76, 80 and 86. The sealed cooling circuit 102 recovers thermal energy from each of the devices 76, 80 and 86 through corresponding heat exchangers 78, 82 and 88 with a coolant 104 that circulates with the circuit 102. The coolant 104 transfers the thermal energy within a circuit heat exchanger 102 to the water flow 58 to generate the heated water flow 100. The use of the closed circuit 102 and coolant 104 can simplify recovery of heat by concentrating the transfer of heat into the water flow 58 in one location. The coolant 104 may be of any known composition capable of operating at temperatures encountered for each of the electrical devices 76 80 and 86.

Although a single circuit 102 is shown, any number of circuits 102 could be utilized within the contemplation of this disclosure. Moreover, the circuit 102 is shown as a simplified schematic view, but may include additional pumps, condensers and valving required to facilitate heating, cooling and transference of thermal energy from the coolant 104 to the water flow 58.

Although the example engine 20 is described and shown by way of example other engine configurations would benefit from this disclosure and are within the contemplation and scope of this disclosure. Moreover, it will be appreciated that other engine configurations may include additional structures and features and are within the contemplation and scope of this disclosure.

Accordingly, the disclosed assemblies provide for recovery of thermal energy input into a cooling water flow used as a heat sink to improve engine efficiency.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A propulsion system for an aircraft comprising:
a core engine (20) including a core flow path (54) where air is compressed in a compressor section (24), communicated to a combustor section (26), mixed with a cryogenic fuel (90) and ignited to generate an exhaust gas flow (52) that is expanded through a turbine section (28);
a condenser (56) arranged along the core flow path (54) and configured to extract water (58) from the exhaust gas flow (52);
an evaporator (64) arranged along the core flow path (54) and configured to receive a portion of the water (58) extracted by the condenser (56) to generate a steam flow (66), wherein the steam flow (66) is injected into the core flow path (54) upstream of the turbine section (28);
an electrical device (76; 80; 86) generating thermal energy; and
a heat exchanger (78; 82; 88) where thermal energy from the electrical device (76; 80; 86) is communicated to a cooling water flow (58).

2. The propulsion system as recited in claim 1, wherein a flow of water (58) heated by thermal energy from the electrical device (76; 80; 86) in the heat exchanger (78; 82; 88) is routed to the evaporator (64).

3. The propulsion system as recited in claim 2, further comprising a sealed coolant circuit (102) including a cooling circuit heat exchanger (102) where a cooling medium (104) transfers thermal energy from the electrical device (76; 80; 86) to the cooling water flow (58).

4. The propulsion system as recited in any preceding claim, wherein the electrical device comprises an electric motor/generator (80).

5. The propulsion system as recited in claim 4, wherein the electric motor/generator (80) is coupled to drive at least one accessory device (84).

6. The propulsion system as recited in any of claims 1 to 3, wherein the electrical device comprises a power electronic device (76).

7. The propulsion system as recited in any of claims 1 to 3, wherein the electrical device comprises a fuel cell (86) that generates electric power (98).

8. The propulsion system as recited in claim 7, wherein the cryogenic fuel (90) comprises a hydrogen based fuel that is communicated to the fuel cell (86) along with a bypass airflow (92).

9. The propulsion system as recited in claim 8, wherein unused hydrogen based fuel (96) expelled from the fuel cell (86) is communicated back to a fuel storage tank (72).

10. The propulsion system as recited in any preceding claim, wherein the turbine section (28) includes at least a low pressure turbine (38), a high pressure turbine (34) and an intermediate pressure turbine (36) and the compressor section (24) includes a high pressure compressor (32) coupled to the high pressure turbine (34) through a high shaft (40) and a low pressure compressor (30) coupled to the intermediate pressure turbine (36) through an intermediate shaft (42).

11. The propulsion system as recited in claim 10, including a gearbox (46) coupled to the low pressure turbine (38) through a low shaft (44) for driving a fan (22) at a rotational speed lower than a rotational speed of the low pressure turbine (38).

12. The propulsion system as recited in any preceding claim, further comprising a cryogenic fuel system (70) for supplying the cryogenic fuel (90) to the combustor section (26) through a fuel flow path (90), the cryogenic fuel system (70) including a cryogenic fuel tank (72) and a fuel pump (74; 62) for pressurizing a liquid cryogenic fuel.

13. The propulsion system as recited in claim 12, wherein the condenser (56) is in thermal communication with a bypass airflow passage for cooling the exhaust gas flow (52) in the condenser (56) during aircraft operation.

14. A method of recovering thermal energy from an electrical device (76; 80; 86) in an aircraft propulsion system, the method comprising:
configuring a core engine (20) to generate an exhaust gas flow (52) from a cryogenic fuel (90);
configuring a condenser (56) to extract water (58) from the exhaust gas flow (52);
configuring an evaporator (64) to generate a steam flow (66) by heating extracted water (58) from the condenser (56) with a portion of the exhaust gas flow (52); and
communicating thermal energy generated by an electrical device (76; 80; 86) into a cooling water flow (58) from the condenser (56) within a heat exchanger (78; 82; 88).

15. The method as recited in claim 18, wherein the method further comprises communicating thermal energy generated by the electrical device (76; 80; 86) into a cooling medium (104) circulating in a sealed cooling circuit (102) and transferring thermal energy from the cooling medium (104) into the cooling water flow (58).
